# FASCICULE DE BREVET EUROPEEN

(11) **EP 3 541 635 B1**
(45) Date de publication et mention de la délivrance du brevet: **30.12.2020**
(21) Numéro de dépôt: 17798198.2
(22) Date de dépôt: 15.11.2017
(51) Int. Cl.: B60C 1/00

(54) **PNEUMATIQUE COMPRENANT UN COPOLYMÈRE À BLOCS COMPRENANT UN BLOC ÉLASTOMÈRE AVEC DES UNITÉS ISOBUTYLÈNE ET HALOGÉNOALKYLSTYRÈNE**
REIFEN ENTHALTEND EIN BLOCKCOPOLYMER ENTHALTEND EINEN ELASTOMERBLOCK MIT EINHEITEN VON ISOBUTYLEN UND HALOGENALKYLSTYROL
TIRE COMPRISING A BLOCK COPOLYMER COMPRISING AN ELASTOMERIC BLOCK HAVING UNITS OF ISOBUTYLENE AND HALOGENOALKYLSTYRENE

(30) Priorité: 17.11.2016 FR 1661140
(43) Date de publication de la demande: 25.09.2019
(73) Titulaire: Compagnie Générale des Etablissements Michelin, 63000 Clermont-Ferrand (FR)
(72) Inventeur: CUSTODERO, Emmanuel, 63040 Clermont-Ferrand Cedex 09 (FR); GREIVELDINGER, Marc, 63040 Clermont-Ferrand Cedex 09 (FR)
(74) Mandataire: Sidhu, Alban
(86) Numéro de dépôt international: PCT/EP2017/079286
(87) Numéro de publication internationale: WO 2018/091509

(56) Documents cités:
- WO-A1-2013/164168
- FR-A1- 2 954 335

## Description

L'invention concerne un pneumatique comprenant un copolymère à blocs comprenant au moins un bloc thermoplastique comportant des unités issues d'un ou plusieurs monomères styréniques et au moins un bloc élastomère sous la forme d'un copolymère statistique comprenant des unités issues de l'isobutylène et des unités issues d'un ou plusieurs monomères halogénoalkylstyrène.

L'invention concerne également l'utilisation de ce copolymère à blocs dans une couche étanche dudit pneumatique.

Enfin, l'invention concerne un pneumatique muni d'une couche étanche à base d'une composition élastomérique comprenant une matrice élastomérique qui comprend au moins 50 pce du copolymère à blocs.

Les pneumatiques sans chambre à air présentent une surface intérieure de faible perméabilité à l'air afin d'éviter un dégonflage du pneumatique et de protéger les zones internes sensibles de ce dernier contre les arrivées d'oxygène et d'eau, telles que les nappes contenant des câbles métalliques sensibles à l'oxydation, cette protection permettant d'améliorer l'endurance du pneumatique.

Aujourd'hui, une telle protection de la surface intérieure des pneumatiques est généralement réalisée par des couches étanches constituées par des compositions élastomériques à base de caoutchouc butyle.

Cependant, les couches étanches à base de ces caoutchoucs butyles présentent des pertes hystérétiques importantes, augmentant ainsi la résistance au roulement des pneumatiques. Dans le but de baisser cette résistance au roulement, les demanderesses ont décrit dans le document WO2008/145276 des couches étanches pour pneumatiques comprenant à titre d'élastomère majoritaire un élastomère thermoplastique à blocs styrène / isobutylène / styrène.

Néanmoins, il demeure intéressant d'améliorer l'adhésion d'une telle couche étanche comprenant un élastomère thermoplastique à blocs, sur une couche diénique adjacente au sein du pneumatique telle que la nappe carcasse.

En effet, une bonne adhésion de la couche étanche à la nappe carcasse est nécessaire aussi bien lors de la fabrication du pneumatique afin d'éviter le décollement de la couche étanche après conformation du pneumatique mais également pendant la durée de vie du pneumatique lors des différentes sollicitations mécaniques et de températures.

En parallèle, la couche étanche doit conserver de bonnes propriétés d'étanchéité aux gaz de gonflage.

Il a maintenant été découvert, de manière surprenante, qu'un copolymère à blocs comprenant au moins un bloc thermoplastique comportant des unités issues d'un ou plusieurs monomères styréniques et au moins un bloc élastomère sous la forme d'un copolymère statistique comprenant des unités issues de l'isobutylène et des unités issues d'un ou plusieurs monomères halogénoalkylstyrène, pouvait former une couche étanche de pneumatique permettant de répondre à ce problème technique.

Par conséquent, l'invention a pour objet un pneumatique comprenant un copolymère à blocs comprenant au moins un bloc thermoplastique comportant des unités issues d'un ou plusieurs monomères styréniques et au moins un bloc élastomère sous la forme d'un copolymère statistique comprenant des unités issues de l'isobutylène et des unités issues d'un ou plusieurs monomères halogénoalkylstyrène.

Ce copolymère à blocs peut être utilisé dans une composition élastomérique servant de base à une couche étanche de pneumatique.

La couche étanche ainsi obtenue présente d'une part une bonne adhésion aussi bien à cru qu'à cuit à la nappe carcasse et d'autre part une bonne étanchéité aux gaz de gonflage.

Par conséquent, l'invention a également pour objet l'utilisation de ce copolymère à blocs dans une couche étanche de pneumatique.

Enfin, l'invention a pour objet un pneumatique muni d'une couche étanche de pneumatique à base d'une composition élastomérique comprenant une matrice élastomérique qui comprend au moins 50 pce de ce copolymère à blocs.

L'invention ainsi que ses avantages seront aisément compris à la lumière de la description et des exemples de réalisations qui suivent.

Dans la présente description, sauf indication expresse différente, tous les pourcentages (%) indiqués sont des % en masse.

D'autre part, tout intervalle de valeurs désigné par l'expression « entre a et b » représente le domaine de valeurs allant de plus de a à moins de b (c'est-à-dire bornes a et b exclues) tandis que tout intervalle de valeurs désigné par l'expression « de a à b » signifie le domaine de valeurs allant de a jusqu'à b (c'est-à-dire incluant les bornes strictes a et b).

Dans la présente demande, on entend par « partie pour cent d'élastomère » ou « pce », la partie en poids d'un constituant pour 100 parties en poids du ou des élastomères c'est-à-dire du poids total du ou des élastomères, qu'ils soient thermoplastiques ou non thermoplastiques dans la composition élastomérique. Ainsi, un constituant à 60 pce signifiera par exemple 60 g de ce constituant pour 100 g d'élastomère de la composition élastomérique.

De façon usuelle dans la présente demande, on utilise indifféremment dans le texte les termes « élastomère » et « caoutchouc » qui sont interchangeables.

Ainsi, un premier objet de l'invention est un pneumatique comprenant un copolymère à blocs comprenant au moins un bloc thermoplastique comportant des unités issues d'un ou plusieurs monomères styréniques et au moins un bloc élastomère sous la forme d'un copolymère statistique comprenant des unités issues de l'isobutylène et des unités issues d'un ou plusieurs monomères halogénoalkylstyrène.

Par monomère styrénique doit être entendu dans la présente description tout monomère à base de styrène, non substitué comme substitué.

Par alkyle doit être entendu dans la présente demande, un groupement hydrocarboné, substitué ou non, comprenant de 1 à 10 atomes de carbone, de préférence de 1 à 5 atomes de carbone.

Par bloc au sens de la présente invention, on entend une chaîne polymérique constituée d'au moins cinq unités, de préférence d'au moins dix unités.

Par bloc thermoplastique, on entend que ce bloc comprend au moins une séquence de 5 unités, de préférence d'au moins 10 unités issues d'un ou plusieurs monomères styréniques.

Par bloc élastomère sous la forme d'un copolymère statistique, on entend que ce bloc comprend au moins une séquence de 5 unités, de préférence d'au moins 10 unités, ladite séquence étant constituée d'une distribution aléatoire au moins d'unités issues de l'isobutylène et d'unités issues d'un ou plusieurs monomères halogénoalkylstyrène.

Ainsi, dans la présente invention, le bloc thermoplastique comporte des unités issues d'un ou plusieurs monomères styréniques.

De préférence, le ou les monomères styréniques sont choisis parmi le styrène, l'o-, m- ou p-méthylstyrène, l'alpha-méthylstyrène, le beta-méthylstyrène, le 2,6-diméthylstyrène, le 2,4-diméthylstyrène, l'alpha-méthyl-o-méthylstyrène, l'alpha-méthyl-m-méthylstyrène, l'alpha-méthyl-p-méthylstyrène, le beta-méthyl-o-méthylstyrène, le beta-méthyl-m-méthylstyrène, le beta-méthyl-p-méthylstyrène, le 2,4,6-triméthylstyrène, l'alpha-méthyl-2,6-diméthylstyrène, l'alpha-méthyl-2,4-diméthylstyrène, le beta-méthyl-2,6-diméthylstyrène, le beta-méthyl-2,4-diméthylstyrène, l'o-, m- ou p-chlorostyrène, le 2,6-dichlorostyrène, le 2,4-dichlorostyrène, l'alpha-chloro-o-chlorostyrène, l'alpha-chloro-m-chloro styrène, l'alpha-chloro-p-chlorostyrène, le beta-chloro-o-chlorostyrène, le beta-chloro-m-chlorostyrène, le beta-chloro-p-chlorostyrène, le 2,4,6-trichlorostyrène, l'alpha-chloro-2,6-dichlorostyrène, l'alpha-chloro-2,4-dichlorostyrène, le beta-chloro-2,6-dichlorostyrène, le beta-chloro-2,4-dichlorostyrène l'o-, m- ou p-butylstyrène, l'o-, m- ou p-méthoxystyrène, l'o-, m- ou p-chlorométhylstyrène, l'o-, m- ou p-bromométhylstyrène, les dérivés styrènes substitués par un groupement silyle, et les mélanges de ces monomères.

De manière tout particulièrement préférée, le ou les monomères styréniques sont choisis parmi le styrène, l'alpha-méthylstyrène, et les mélanges de ces monomères, et plus préférentiellement le monomère styrénique est le styrène.

Dans la présente invention, le bloc élastomère est sous la forme d'un copolymère statistique comprenant au moins des unités issues de l'isobutylène et des unités issues d'un ou plusieurs monomères halogénoalkylstyrène.

De préférence, le ou les monomères halogénoalkylstyrène sont choisis parmi les monomères chloroalkylstyrène, bromoalkylstyrène, iodoalkylstyrène, et les mélanges de ces monomères, plus préférentiellement le ou les monomères halogénoalkylstyrène sont choisis parmi les monomères bromoalkylstyrène et les monomères chloroalkylstyrène, encore plus préférentiellement le monomère halogénoalkylstyrène est le bromométhylstyrène, et en particulier le monomère halogénoalkylstyrène est le para-bromométhylstyrène.

De manière préférée, la teneur des unités issus d'un ou plusieurs monomères halogénoalkylstyrène dans le ou les blocs élastomère varie de 0,5 à 5 % en moles par rapport au nombre de moles d'unités du copolymère à blocs.

Avantageusement dans la présente invention, le ou les blocs thermoplastiques du copolymère à blocs représentent de 5 à 50 % en poids, de préférence représentent de 10 à 40 % en poids, plus préférentiellement représentent de 15 à 35 % en poids, par rapport au poids total du copolymère à blocs.

Dans la présente demande, lorsqu'il est fait référence à la température de transition vitreuse du copolymère à blocs comprenant au moins un bloc thermoplastique et au moins un bloc élastomère, il s'agit de la température de transition vitreuse relative aux blocs élastomères. En effet, de manière connue, les copolymères à blocs comme celui de l'invention présentent deux pics de température de transition vitreuse (Tg, mesurée selon ASTM D3418), la température la plus basse étant relative à la partie élastomère du copolymère à blocs, et la température la plus haute étant relative à la partie thermoplastique du copolymère à blocs. Ainsi, les blocs élastomères du copolymère à blocs se définissent par une Tg inférieure à la température ambiante (25°C), tandis que les blocs thermoplastiques du copolymère à blocs ont une Tg supérieure à 80°C. Avantageusement, le copolymère à blocs utilisable selon l'invention a une température de transition vitreuse inférieure à -20°C, de préférence inférieure à -40°C. Une valeur de Tg supérieure à ces minima peut diminuer les performances de la couche étanche comprenant le copolymère à blocs lors d'une utilisation à très basse température. Pour une telle utilisation, la Tg du copolymère à blocs selon l'invention est de préférence inférieure à -50°C.

La masse moléculaire moyenne en nombre (notée Mn) du copolymère à blocs utilisable selon l'invention va préférentiellement de 30 000 à 500 000 g/mol, plus préférentiellement va de 40 000 à 400 000 g/mol. En dessous des minima indiqués, la cohésion entre les chaînes d'élastomères, notamment en raison de leur dilution éventuelle par une huile d'extension ou autre plastifiant liquide, risque d'être affectée. Par ailleurs, une masse Mn trop élevée peut être pénalisante pour la souplesse de la couche étanche. Ainsi, on a constaté qu'une valeur allant de 50 000 à 300 000 g/mol était particulièrement bien adaptée, notamment à une utilisation du copolymère à blocs dans une couche étanche de pneumatique.

De manière préférée, le copolymère à blocs utilisable selon l'invention présente une masse moléculaire moyenne en poids (notée Mw) allant de 100 000 à 250 000 g/mol.

Les masses moléculaires moyennes en nombre (Mn) et en poids (Mw) du copolymère à blocs utilisable selon la présente invention sont déterminées de manière connue, par chromatographie d'exclusion stérique (SEC). L'échantillon est préalablement solubilisé dans du tétrahydrofuranne à une concentration d'environ 1 g/L ; puis la solution est filtrée sur filtre de porosité 0,45 µm avant injection. L'appareillage utilisé est une chaîne chromatographique « WATERS alliance ». Le solvant d'élution est le tétrahydrofuranne, le débit de 0,7 ml/min, la température du système de 35°C et la durée d'analyse de 90 min. On utilise un jeu de quatre colonnes WATERS en série, de dénominations commerciales « STYRAGEL » (« HMW7 », « HMW6E » et deux « HT6E »). Le volume injecté de la solution de l'échantillon de polymère est de 100 µL. Le détecteur est un réfractomètre différentiel « WATERS 2410 » et son logiciel associé d'exploitation des données chromatographiques est le système « WATERS MILLENIUM ». Les masses molaires moyennes calculées sont relatives à une courbe d'étalonnage réalisée avec des étalons de polystyrène.

L'indice de polydispersité (Ip = Mw/Mn) du copolymère à blocs utilisable selon l'invention est de préférence inférieur à 3 ; plus préférentiellement l'indice de polydispersité est inférieur à 2.

De manière préférée, le copolymère à blocs utilisable selon l'invention est choisi parmi les copolymères diblocs bloc thermoplastique/bloc élastomère, les copolymères triblocs bloc thermoplastique/bloc élastomère/bloc thermoplastique et les mélanges de ces copolymères, et de préférence le copolymère à blocs est un copolymère triblocs bloc thermoplastique/bloc élastomère/bloc thermoplastique.

Le copolymère à bloc utilisable selon l'invention est de préférence utilisé dans la couche étanche du pneumatique selon l'invention.

Ainsi, un autre objet de la présente invention est l'utilisation du copolymère à blocs tel que défini ci-dessus dans une couche étanche de pneumatique.

Un autre objet de la présente invention est un pneumatique muni d'une couche étanche à base d'une composition élastomérique comprenant une matrice élastomérique qui comprend au moins 50 pce du copolymère à blocs tel que défini ci-dessus.

Par l'expression couche étanche de pneumatique « à base d'» une composition élastomérique, il faut entendre que la couche étanche comporte un mélange et/ou le produit de réaction des différents constituants utilisés dans la composition élastomérique, certains de ces constituants de base étant susceptibles de, ou destinés à, réagir entre eux, au moins en partie, lors des différentes phases de fabrication de la couche étanche, en particulier au cours de sa réticulation et/ou de sa vulcanisation.

Par « matrice élastomérique » au sens de la présente invention, on entend l'ensemble des élastomères (ou caoutchoucs) de la composition élastomérique. Ainsi, la matrice élastomérique peut notamment être constituée d'un seul élastomère mais aussi d'un coupage de deux ou de plusieurs élastomères.

Le copolymère à blocs utilisable selon l'invention représente au moins 50 pce, c'est-à-dire qu'il représente au moins 50 % en poids du poids total de la matrice élastomérique.

De manière préférée dans la présente invention, la teneur en copolymère à blocs de la composition élastomérique varie de 70 à 100 pce, de préférence varie de 90 à 100 pce.

De manière particulièrement préférée dans la présente invention, le copolymère à blocs utilisable selon la présente invention est le seul élastomère de la composition élastomérique.

Néanmoins, la composition élastomérique peut comprendre d'autres élastomères.

A titre d'autres élastomères présents dans la matrice élastomérique en complément du copolymère à blocs, on peut notamment citer les élastomères diéniques.

Par élastomère ou caoutchouc « diénique », doit être compris, de manière connue, un ou plusieurs élastomères issus au moins en partie (i.e ; un homopolymère ou un copolymère) de monomères diènes (monomères porteurs de deux doubles liaisons carbone-carbone, conjuguées ou non).

Ces élastomères diéniques peuvent être classés dans deux catégories : « essentiellement insaturés » ou « essentiellement saturés ».

On entend en général par « essentiellement insaturé », un élastomère diénique issu au moins en partie de monomères diènes conjugués, ayant un taux d'unités d'origine diénique (diènes conjugués) qui est supérieur à 15 % (% en mole). Dans la catégorie des élastomères diéniques « essentiellement insaturés », on entend en particulier par élastomère diénique « fortement insaturé » un élastomère diénique ayant un taux d'unités d'origine diénique (diènes conjugués) qui est supérieur à 50 %.

C'est ainsi que des élastomères diéniques tels que certains copolymères de diènes et d'alpha-oléfines type EPDM peuvent être qualifiés d'élastomères diéniques « essentiellement saturés » (taux d'unités d'origine diénique faible ou très faible, toujours inférieur à 15 %).

Ces définitions étant données, on entend plus particulièrement par élastomère diénique, quelque soit la catégorie ci-dessus, susceptible d'être utilisé dans la matrice élastomérique de la couche étanche de pneumatique conforme à l'invention :
(a) tout homopolymère obtenu par polymérisation d'un monomère diène conjugué ayant de 4 à 12 atomes de carbone ;
(b) tout copolymère obtenu par copolymérisation d'un ou plusieurs diènes conjugués entre eux ou avec un ou plusieurs composés vinyle aromatique ayant de 8 à 20 atomes de carbone ;
(c) un copolymère ternaire obtenu par copolymérisation d'éthylène, d'une α-oléfine ayant 3 à 6 atomes de carbone avec un monomère diène non conjugué ayant de 6 à 12 atomes de carbone, comme par exemple les élastomères obtenus à partir d'éthylène, de propylène avec un monomère diène non conjugué du type précité tel que notamment l'hexadiène-1,4, l'éthylidène norbornène, le dicyclopentadiène.

A titre de diènes conjugués conviennent notamment le butadiène-1,3, le 2-méthyl-1,3-butadiène, les 2,3-di(alkyle en C₁-C₅)-1,3-butadiènes tels que par exemple le 2,3-diméthyl-1,3-butadiène, le 2,3-diéthyl-1,3-butadiène, le 2-méthyl-3-éthyl-1,3-butadiène, le 2-méthyl-3-isopropyl-1,3-butadiène, un aryl-1,3-butadiène, le 1,3-pentadiène, le 2,4-hexadiène. A titre de composés vinylaromatique conviennent par exemple le styrène, l'ortho-, méta-, paraméthylstyrène, le mélange commercial « vinyle-toluène », le para-tertiobutylstyrène, les méthoxystyrènes, les chlorostyrènes, le vinylmésitylène, le divinylbenzène, le vinylnaphtalène.

Les copolymères diéniques précédemment cités (catégorie (b)) peuvent contenir entre 99 % et 20 % en poids d'unités diéniques et entre 1 % et 80 % en poids d'unités vinylaromatiques. Les élastomères peuvent avoir toute microstructure qui est fonction des conditions de polymérisation utilisées, notamment de la présence ou non d'un agent modifiant et/ou randomisant et des quantités d'agent modifiant et/ou randomisant employées. Les élastomères peuvent être par exemple à blocs, statistiques, séquencés, microséquencés, et être préparés en dispersion ou en solution ; ils peuvent être couplés et/ou étoilés ou encore fonctionnalisés avec un agent de couplage et/ou d'étoilage ou de fonctionnalisation.

Conviennent les polybutadiènes et en particulier ceux ayant une teneur (% molaire) en unités -1,2 comprise entre 4 % et 80 % ou ceux ayant une teneur (% molaire) en cis-1,4 supérieure à 80 %, les polyisoprènes, les copolymères de butadiène-styrène et en particulier ceux ayant une teneur en styrène comprise entre 5 % et 50 % en poids et plus particulièrement entre 20 % et 40 %, une teneur (% molaire) en liaisons -1,2 de la partie butadiénique comprise entre 4 % et 65 %, une teneur (% molaire) en liaisons trans-1,4 comprise entre 20 % et 80 %, les copolymères de butadiène-isoprène et notamment ceux ayant une teneur en isoprène comprise entre 5 % et 90 % en poids et une température de transition vitreuse (Tg, mesurée selon ASTM D3418) de -40°C à -80°C, les copolymères isoprène-styrène et notamment ceux ayant une teneur en styrène comprise entre 5 % et 50 % en poids et une Tg comprise entre -25°C et -50°C. Dans le cas des copolymères de butadiène-styrène-isoprène conviennent notamment ceux ayant une teneur en styrène comprise entre 5 % et 50 % en poids et plus particulièrement comprise entre 10 % et 40 %, une teneur en isoprène comprise entre 15 % et 60 % en poids et plus particulièrement entre 20 % et 50 %, une teneur en butadiène comprise entre 5 % et 50 % en poids et plus particulièrement comprise entre 20 % et 40 %, une teneur (% molaire) en unités -1,2 de la partie butadiénique comprise entre 4 % et 85 %, une teneur (% molaire) en unités trans -1,4 de la partie butadiénique comprise entre 6 % et 80 %, une teneur (% molaire) en unités -1,2 plus -3,4 de la partie isoprénique comprise entre 5 % et 70 % et une teneur (% molaire) en unités trans -1,4 de la partie isoprénique comprise entre 10 % et 50 %, et plus généralement tout copolymère butadiène-styrène-isoprène ayant une Tg comprise entre -20°C et -70°C.

A titre d'autres élastomères présents dans la matrice élastomérique en complément du copolymère à blocs on peut aussi citer les élastomères isopréniques.

Par « élastomère isoprénique », on entend de manière connue un homopolymère ou un copolymère d'isoprène, en d'autres termes un élastomère diénique choisi dans le groupe constitué par le caoutchouc naturel (NR), les polyisoprènes de synthèse (IR), les différents copolymères d'isoprène et les mélanges de ces élastomères. Parmi les copolymères d'isoprène, on citera en particulier les copolymères d'isoprène-styrène (SIR), d'isoprène-butadiène (BIR) ou d'isoprène-butadiène-styrène (SBIR). Cet élastomère isoprénique est de préférence du caoutchouc naturel ou un polyisoprène cis-1,4 de synthèse ; parmi ces polyisoprènes de synthèse, sont utilisés de préférence des polyisoprènes ayant un taux (% molaire) de liaisons cis-1,4 supérieur à 90 %, plus préférentiellement encore supérieur à 98 %.

La couche étanche du pneumatique selon l'invention telle que décrite précédemment permet à elle seule de répondre au problème technique posé, en particulier elle présente d'une part une bonne adhésion à la nappe carcasse et d'autre part une bonne étanchéité aux gaz de gonflage.

Cependant, la composition élastomérique utilisable dans la couche étanche du pneumatique selon l'invention peut comprendre en outre une ou plusieurs charges.

Le terme « charge » selon l'invention regroupe les charges renforçantes, les charges semi-renforçantes et les charges inertes.

On entend par charges renforçantes au sens de la présente invention, tout type de charges connues pour ses capacités à renforcer une composition élastomérique utilisable pour la fabrication de pneumatiques, par exemple une charge organique telle que du noir de carbone ou bien encore une charge inorganique renforçante.

Ainsi dans la présente invention, la composition élastomérique utilisable dans la couche étanche du pneumatique selon l'invention peut comprendre de 0 à 50 pce de noir de carbone.

Comme noirs de carbone conviennent tous les noirs de carbone, notamment les noirs du type HAF, ISAF, SAF conventionnellement utilisés dans les pneumatiques (noirs dits de grade pneumatique). Parmi ces derniers, on citera plus particulièrement les noirs de carbone renforçants des séries 100, 200 ou 300 (grades ASTI), comme par exemple les noirs N115, N134, N234, N326, N330, N339, N347, N375, ou encore, selon les applications visées, les noirs de séries plus élevées (par exemple N660, N683, N772), voire même N990.

Bien entendu, on peut utiliser un seul noir de carbone ou un coupage de plusieurs noirs de carbone de grades ASTM différents.

Dans la composition élastomérique utilisable dans la couche étanche du pneumatique selon l'invention, le noir de carbone peut constituer la seule charge de la composition.

La composition élastomérique utilisable dans la couche étanche du pneumatique selon l'invention peut aussi comprendre, outre le noir de carbone, une ou plusieurs charges additionnelles.

Cette ou ces charges additionnelles peuvent être choisies parmi les charges renforçantes autres que du noir du carbone, les charges semi-renforçantes et les charges inertes.

Ainsi la composition élastomérique utilisable dans la couche étanche du pneumatique selon l'invention peut aussi comprendre une ou des charges inorganiques renforçantes.

Par « charge inorganique renforçante », doit être entendu dans la présente demande, par définition, toute charge inorganique ou minérale (quelles que soient sa couleur et son origine (naturelle ou de synthèse), encore appelée charge « blanche », charge « claire » voire « charge non-noire » (« non-black filler ») par opposition au noir de carbone, capable de renforcer à elle seule, sans autre moyen qu'un agent de couplage intermédiaire, une composition élastomérique destinée à la fabrication de pneumatiques, en d'autres termes apte à remplacer, dans sa fonction de renforcement, un noir de carbone conventionnel de grade pneumatique ; une telle charge se caractérise généralement, de manière connue, par la présence de groupes hydroxyle (-OH) à sa surface.

L'état physique sous lequel se présente la charge inorganique renforçante est indifférent, que ce soit sous forme de poudre, de microperles, de granulés, de billes ou toute autre forme densifiée appropriée. Bien entendu on entend également par charge inorganique renforçante des mélanges de différentes charges inorganiques renforçantes, en particulier de charges siliceuses et/ou alumineuses hautement dispersibles telles que décrites ci-après.

Comme charges inorganiques renforçantes conviennent notamment des charges minérales du type siliceuse, en particulier de la silice (SiO₂), ou du type alumineuse, en particulier de l'alumine (Al₇O₃). La silice utilisée peut être toute silice renforçante connue de l'homme du métier, notamment toute silice précipitée ou pyrogénée présentant une surface BET ainsi qu'une surface spécifique CTAB toutes deux inférieures à 450 m²/g, de préférence de 30 à 400 m²/g.

A titres de silices précipitées hautement dispersibles (dites « HDS »), on citera par exemple les silices Ultrasil 7000 et Ultrasil 7005 de la société Degussa, les silices Zeosil 1165MP, 1135MP et 1115MP de la société Rhodia, la silice Hi-Sil EZ150G de la société PPG, les silices Zeopol 8715, 8745 et 8755 de la Société Huber, les silices à haute surface spécifique telles que décrites dans la demande WO 03/16837.

Enfin, l'homme du métier comprendra qu'à titre de charge équivalente de la charge inorganique renforçante décrite dans le présent paragraphe, pourrait être utilisée une charge renforçante d'une autre nature, notamment organique, dès lors que cette charge renforçante serait recouverte d'une couche inorganique telle que silice, ou bien comporterait à sa surface des sites fonctionnels, notamment hydroxyles.

La présence d'une charge renforçante inorganique ou d'une charge renforçante d'une autre nature recouverte d'une couche inorganique ou comportant à sa surface des sites fonctionnels, dans une composition élastomérique nécessite généralement l'utilisation d'un agent de couplage pour établir la liaison entre la charge et l'élastomère.

On rappelle ici que par « agent de couplage » on entend, de manière connue, un agent apte à établir une liaison suffisante, de nature chimique et/ou physique, entre la charge inorganique (ou d'une autre nature comme vu ci-dessus) et l'élastomère.

De tels agents de couplage, notamment silice/élastomère ont été décrits dans un très grand nombre de documents, les plus connus étant des organosilanes bifonctionnels porteurs de fonctions alkoxyle (c'est-à-dire, par définition, des « alkoxysilanes ») et de fonctions capables de réagir avec l'élastomère telles que par exemple des fonctions polysulfure.

Comme vu précédemment, la ou les charges additionnelles éventuellement présentes dans la composition élastomérique utilisable dans la couche étanche du pneumatique selon l'invention peuvent être choisies parmi les charges semi-renforçantes.

Les charges semi-renforçantes ne sont pas capables de renforcer à elles seules une composition élastomérique destinée à la fabrication de pneumatiques, en d'autres termes elles ne sont pas aptes à remplacer, dans sa fonction de renforcement, un noir de carbone conventionnel de grade pneumatique, cependant elles permettent une augmentation du module en traction d'une composition élastomérique dans laquelle elles sont incorporées, c'est pourquoi on les nomme « semi-renforçantes ».

A titre de charge semi-renforçante éventuellement présente au sens de la présente invention, on peut notamment citer le graphite.

Par graphite, on entend de manière générale un ensemble de feuillets hexagonaux non compacts d'atomes de carbone : les graphènes. Le graphite, système cristallin hexagonal, présente un empilement de type ABAB où le plan B est translaté par rapport au plan A ; il appartient au groupe cristallin : groupe d'espace P63/mmc.

Le graphite ne peut pas être considéré comme une charge renforçante contrairement au noir de carbone ou à la silice. Il permet simplement une augmentation du module en traction d'une composition élastomérique dans laquelle il est incorporé mais ne permet pas de renforcer cette composition.

Ces définitions étant données, on entend plus particulièrement par graphite susceptible d'être utilisé selon l'invention :
(a) tout graphite naturel, associé aux roches affectées par le métamorphisme, après séparation des impuretés accompagnant les veines de graphite et après broyage ;
(b) tout graphite naturel expansable thermiquement, i.e. dans lequel est intercalé un composé chimique à l'état liquide, par exemple un acide, entre ses plans de graphène ;
(c) tout graphite naturel expansé, ce dernier étant réalisé en deux temps : intercalation d'un composé chimique à l'état liquide, par exemple un acide, entre les plans de graphène d'un graphite naturel par traitement chimique et expansion à haute température ;
(d) tout graphite synthétique obtenu par graphitisation de coke de pétrole.

La composition élastomérique utilisable dans la couche étanche du pneumatique selon l'invention peut contenir un seul graphite ou un mélange de plusieurs graphites, ainsi on peut avoir un coupage de graphite naturel et/ou de graphite expansé et/ou de graphite synthétique.

Le graphite tel que défini précédemment, peut se présenter sur un plan morphologique sous une forme lamellaire ou non.

De manière préférée, le graphite utilisable selon l'invention se présente sous forme lamellaire.

Comme vu précédemment, la ou les charges additionnelles peuvent être choisies parmi les charges inertes.

La ou les charges inertes utilisables selon l'invention peuvent être choisies parmi la craie, l'argile, la bentonite, le talc, le kaolin, des microbilles de verre, des paillettes de verre (« glass flakes » en anglais) et un mélange de ces composés.

Dans la présente invention, le noir de carbone peut avantageusement constituer la seule charge renforçante ou la charge renforçante majoritaire.

De manière plus particulièrement préférée, le noir de carbone peut avantageusement constituer la seule charge de la composition élastomérique.

La composition élastomérique de la couche interne étanche peut également comporter des microdomaines ou microparticules de matériau thermoplastique tels que décrits dans la demande de brevet WO2011/141466.

La composition élastomérique utilisable dans la couche étanche du pneumatique selon l'invention peut comprendre en outre un agent plastifiant.

De manière connue de l'homme du métier, un « agent plastifiant » par définition est un composé liquide ou solide à température ambiante (23°C) et à pression atmosphérique (1,013.10⁵ Pa) compatible, c'est-à-dire miscible au taux utilisé avec la composition élastomérique à laquelle il est destiné, de manière à agir comme un véritable agent diluant.

De manière préférée dans la présente invention, l'agent plastifiant est choisi parmi les huiles plastifiantes et les résines plastifiantes.

Par définition, une huile plastifiante (aussi appelée plastifiant liquide) est liquide à température ambiante et pression atmosphérique.

Cette ou ces huiles plastifiantes ont généralement une température de transition vitreuse faible, inférieure à -20°C (Tg, mesurée selon ASTM D3418), de préférence inférieure à -40°C.

Les températures de transition vitreuse sont mesurées de manière connue par DSC (« Differential Scanning Calorimetry ») selon la norme ASTM D3418.

A titre d'huile plastifiante utilisable dans la couche étanche du pneumatique selon l'invention, on peut utiliser toutes les huiles dites « d'extension » qu'elles soient de nature aromatique ou non-aromatique connues pour leurs propriétés plastifiantes vis-à-vis des élastomères utilisés dans la présente invention.

Conviennent particulièrement les huiles plastifiantes choisies dans le groupe constitué par les polymères diéniques liquides, les huiles polyoléfiniques, les huiles naphténiques, les huiles paraffiniques, les huiles DAE (Distillate Aromatic Extracts), les huiles MES (Médium Extracted Solvates), les huiles TDAE (Treated Distillate Aromatic Extracts), les huiles RAE (Residual Aromatic Extracts), les huiles TRAE (Treated Residual Aromatic Extracts), les huiles SRAE (Safety Residual Aromatic Extracts), les huiles minérales, les huiles végétales, les plastifiants éthers, les plastifiants esters, les plastifiants phosphates, les plastifiants sulfonates et les mélanges de ces composés.

Conviennent également les polymères liquides issus de la polymérisation d'oléfines ou de diènes, comme par exemple ceux choisis dans le groupe constitué par les polybutènes, les polydiènes, en particulier les polybutadiènes, les polyisoprènes, les copolymères de butadiène et d'isoprène, les copolymères de butadiène ou d'isoprène et de styrène, et les mélanges de ces polymères liquides. La masse molaire moyenne en nombre de tels polymères liquides est préférentiellement comprise dans un domaine allant de 500 g/mol à 50 000 g/mol, plus préférentiellement de 1000 g/mol à 10 000 g/mol. A titre d'exemple peuvent être cités notamment les produits « Ricon » de la société Sartomer.

Conviennent également les huiles polyisobutylènes fonctionnalisées ou non, ayant une masse moléculaire comprise entre 200 g/mol et 40 000 g/mol.

Selon un autre mode de réalisation préférentiel de l'invention, la ou les huiles plastifiantes sont des huiles végétales (telles que huiles de lin, carthame, soja, maïs, coton, navette, ricin, abrasin, pin, tournesol, palme, olive, noix de coco, arachide, pépin de raisin, et les mélanges de ces huiles, en particulier une huile de tournesol).

Selon un autre mode de réalisation particulier de l'invention, la ou les huiles plastifiantes sont un éther comme par exemple les polyéthylène glycols ou les polypropylène glycols.

Conviennent également les huiles plastifiantes choisies dans le groupe constitué par les plastifiants esters, les plastifiants phosphates, les plastifiants sulfonates et les mélanges de ces composés.

Pour rappel, l'agent plastifiant peut aussi être choisi parmi les résines plastifiantes.

Par opposition avec les huiles plastifiantes, on entend par résine plastifiante un composé qui est solide à température ambiante (23°C) et à pression atmosphérique (1,013.10⁵ Pa).

Cette ou ces résines plastifiantes ont généralement une température de transition vitreuse, supérieure à 20°C (Tg, mesurée selon ASTM D3418), de préférence supérieure à 30°C.

De manière préférée, les résines plastifiantes utilisables selon l'invention sont des résines plastifiantes hydrocarbonées.

Les résines hydrocarbonées sont des polymères bien connus de l'homme du métier, miscibles donc par nature dans les compositions d'élastomère(s) lorsqu'elles sont qualifiées en outre de « plastifiantes ».

Ces résines plastifiantes hydrocarbonées présentent généralement une température de transition vitreuse supérieure à 20°C et une température de ramollissement inférieure à 170°C.

Les températures de ramollissement (« softening point ») sont mesurées selon la norme ASTM E-28.

Elles ont été largement décrites par exemple dans l'ouvrage intitulé « Hydrocarbon Resins » de R. Mildenberg, M. Zander et G. Collin (New York, VCH, 1997, ISBN 3-527-28617-9) dont le chapitre 5 est consacré à leurs applications, notamment en caoutchouterie pneumatique (5.5. « Rubber Tires and Mechanical Goods »).

Elles peuvent être aliphatiques, naphténiques, aromatiques ou encore du type aliphatique/naphténique/aromatique c'est-à-dire à base de monomères aliphatiques et/ou naphténiques et/ou aromatiques. Elles peuvent être naturelles ou synthétiques, à base ou non de pétrole (si tel est le cas, elles sont connues aussi sous le nom de résines de pétrole). Elles sont préférentiellement exclusivement hydrocarbonées, c'est-à-dire qu'elles ne comportent que des atomes de carbone et d'hydrogène.

La teneur en agent plastifiant dans la composition élastomérique utilisable dans la couche étanche du pneumatique selon l'invention varie généralement de 0 à moins de 10 pce.

La composition élastomérique utilisable dans la couche étanche du pneumatique selon l'invention peut comporter également tout ou partie des additifs usuels habituellement utilisés dans les compositions élastomériques destinées à la fabrication de pneumatiques, comme par exemple des agents de protection tels que anti-ozonants chimiques, anti-oxydants, des agents anti-fatigue, des accepteurs (par exemple résine phénolique novolaque) ou des donneurs de méthylène (par exemple HMT ou H3M), un système de réticulation à base soit de soufre, soit de donneurs de soufre et/ou de peroxyde et/ou de bismaléimides et/ou des résines vulcanisantes, des accélérateurs de vulcanisation, des activateurs de vulcanisation.

La composition élastomérique utilisable dans la couche étanche du pneumatique selon l'invention peut être fabriquée dans des mélangeurs appropriés, bien connus de l'homme du métier.

De manière préférée dans la présente invention, la composition élastomérique utilisable dans la couche étanche du pneumatique selon l'invention n'est pas réticulée.

La composition finale ainsi obtenue peut ensuite être calandrée, par exemple sous la forme d'une feuille, d'une plaque notamment pour une caractérisation au laboratoire, ou encore extrudée, par exemple pour former un profilé de caoutchouc utilisé pour la fabrication d'une couche étanche.

De manière générale, le pneumatique selon l'invention est destiné à équiper des véhicules à moteur de type tourisme, SUV (« Sport Utility Vehicles »), deux roues (notamment motos), avions, ainsi que des véhicules industriels tels que des camionnettes, des poids-lourds et autres véhicules de transport ou de manutention.

L'invention ainsi que ses avantages seront compris de manière plus approfondie, à la lumière des exemples de réalisation qui suivent.

### Méthodes de mesures

### Test d'adhésion (ou pelage)

Des tests d'adhésion (tests de pelage) ont été conduits pour tester l'aptitude de la couche étanche du pneumatique selon l'invention à adhérer après cuisson à une couche d'élastomère diénique, plus précisément à une composition de caoutchouc usuelle pour armature de carcasse de bandage pneumatique, à base de caoutchouc naturel (peptisé) et de noir de carbone N330 (65 parties en poids pour cent parties de caoutchouc naturel), comportant en outre les additifs usuels (soufre, accélérateur, ZnO, acide stéarique, antioxydant).

Les éprouvettes de pelage (du type pelage à 180°) ont été réalisées par empilage d'une couche calandrée de couche étanche (1,5 mm) et d'une couche calandrée d'élastomère diénique (1,2 mm). Une amorce de rupture est insérée entre les deux couches calandrées.

L'éprouvette après assemblage a été chauffée à 180°C sous pression pendant 10 minutes et le refroidissement a été réalisé sous pression. Des bandes de 30 mm de largeur ont été découpées au massicot. Les deux côtés de l'amorce de rupture ont été ensuite placées dans les mors d'un machine de traction de marque Intron®. Les essais sont réalisés à température ambiante et à une vitesse de traction de 100 mm/min. On enregistre les efforts de traction et on norme ceux-ci par la largeur de l'éprouvette. On obtient une courbe de force par unité de largeur (en N/mm) en fonction du déplacement de traverse mobile de la machine de traction (entre 0 et 200 mm). La valeur d'adhésion retenue correspond à l'initiation de la rupture au sein de l'éprouvette et donc à la valeur maximale de cette courbe. Cette mesure a été effectuée aussi bien à température ambiante qu'à 60°C. Les résultats sont exprimés en force moyenne de pelage par unité de largeur de l'éprouvette (N/mm). Les performances des exemples sont normées (en base 100) par rapport au témoin, auquel, par convention on attribue une performance à 100, pour une comparaison facilitée des performances. Ainsi, plus la valeur en base 100 est élevée, plus la performance d'adhésion est bonne.

### Test d'étanchéité

Pour cette analyse, on a utilisé un perméamètre à parois rigides, placé dans une étuve (température de 60°C dans le cas présent), muni d'un capteur de pression relative (étalonné dans le domaine de 0 à 6 bars) et relié à un tube équipé d'une valve de gonflage. Le perméamètre peut recevoir des éprouvettes standards sous forme de disque (par exemple de diamètre 65 mm dans le cas présent) et d'épaisseur uniforme pouvant aller jusqu'à 1,5 mm (0,5 mm dans le cas présent). Le capteur de pression est connecté à une carte d'acquisition de données National Instruments (acquisition quatre voies analogiques 0-10 V) qui est reliée à un ordinateur réalisant une acquisition en continu avec une fréquence de 0,5 Hz (1 point toutes les deux secondes). Le coefficient de perméabilité (K) est mesuré à partir de la droite de régression linéaire donnant la pente α de la perte de pression à travers l'éprouvette testée en fonction du temps, après stabilisation du système c'est-à-dire obtention d'un régime stable au cours duquel la pression décroît linéairement en fonction du temps. Les résultats sont exprimés en valeur d'étanchéité ((m⁴.N⁻¹.s⁻¹)/E⁻⁷). Les performances des exemples sont normées (en base 100) par rapport au témoin, auquel, par convention on attribue une performance à 100, pour une comparaison facilitée des performances. Ainsi, plus la valeur en base 100 est élevée, plus la performance d'étanchéité est bonne, et donc le coefficient de perméabilité K est bas.

### Exemples

### 1) Préparation de copolymères à blocs bloc thermoplastique/bloc élastomère/bloc thermoplastique

Un copolymère à bloc comparatif (C1) et cinq copolymères à blocs selon l'invention (C2 à C6) ont été préparés conformément aux protocoles ci-dessous.

### Copolymère à blocs C1

Le copolymère à blocs C1 est disponible commercialement sous la référence « SIBSTAR 102T » de la société KANEKA.

### Copolymère à blocs C2

Le copolymère à blocs C2 est synthétisé comme suit :
Un ballon séparable (récipient de polymérisation) de 5 litres est mis sous azote, puis du n-hexane (séché sur tamis moléculaire, 404 ml) et du chlorure de butyle (séché sur tamis moléculaire, 943 ml) sont ajoutés au moyen d'une seringue. Le récipient de polymérisation est ensuite refroidi par immersion dans un bain sec glace/méthanol à -70°C. Un tube d'alimentation en Téflon est connecté à un flacon de collecte en verre résistant à la pression équipé avec un robinet à trois voies et contenant de l'isobutylène (331 ml, 3,5 mol). L'isobutylène est ajouté au récipient de polymérisation au moyen d'une pression d'azote. Ensuite, du chlorure de p-dicumyle (0,55 g, 2,4 mmol), de la triéthylamine (0,72 g, 7,1 mmol), et du tétraisopropoxyde de titane (6,04 ml, 20 mmol) sont additionnés. Puis, du tétrachlorure de titane (15,7 ml, 143 mmol) est additionné afin de démarrer la polymérisation.

Peu de temps après, du paraméthylstyrène (11,2 g, 95 mmol) est ajouté en continu pendant 30 mn. Les conversions de l'isobutylène et du paraméthylstyrène sont suivies par chromatographie en phase gazeuse (GC). Les conversions atteignent alors plus de 98,5 %.

Du styrène (47,7 ml, 414 mmol) est ensuite ajouté et la solution de polymérisation est agitée jusqu'à atteindre une conversion du styrène de 80 % (suivi de la conversion par chromatographie gazeuse (GC)). La solution de polymérisation et un mélange de solvants constitué de n-hexane et de chlorure de butyle (600 g, 3/7 v/v) sont versés dans un récipient de désactivation contenant de l'eau déionisée (1200 g) à 55°C afin de stopper la réaction et, ce mélange est alors agité pendant 60 mn. Ensuite, la solution de polymérisation est lavée avec de l'eau déionisée (3x 2000 g). Le solvant et les analogues sont évaporés à partir du brut de réaction lavé sous pression réduite à 80°C pendant 24 heures pour obtenir un copolymère à blocs non-bromé.

Le copolymère à bloc non-bromé (220 g) est dissous dans du chlorure de butyle (873 g) et du n-hexane (73 g) dans un ballon de 2 litres. De l'azote est introduit dans la solution de polymère agitée au moyen d'une tige en acier inoxydable pendant 1 heure. Ensuite, du brome (14,2 g, 89 mmol) et de l'azobisisobutyronitrile (0,294 g, 1,8 mmol) sont ajoutés et l'ensemble est chauffé à 95°C dans un bain d'huile. Après 20 mn, de l'eau déionisée (200 ml) est ajoutée et le mélange est agité jusqu'à ce que la solution de polymère se décolore. Le solvant et les analogues sont évaporés à partir du brut de réaction sous pression réduite à 80°C pendant 24 heures pour obtenir le copolymère à blocs bromé C2 selon l'invention.

Les masses moléculaires du bloc élastomère (copolymère statistique isobutylène/bromométhylstyrène), du copolymère à bloc non-bromé et du copolymère à blocs bromé final sont mesurées par chromatographie sur gel perméable (GPC).

### Copolymère à blocs C3

Le copolymère à blocs C3 est synthétisé comme suit :
Un récipient (récipient de polymérisation) de 200 litres est mis sous azote, puis du n-hexane (séché sur tamis moléculaire, 23,7 kg) et du chlorure de butyle (séché sur tamis moléculaire, 74,3 kg) sont ajoutés au moyen d'une conduite de solvants. Le récipient de polymérisation est ensuite refroidi par une enveloppe calorifugée de trifluorométhane (HFC-23) à -70°C. De l'isobutylène (17,4 kg, 310 mol) est ajouté au récipient de polymérisation à partir d'un réservoir d'isobutylène. Ensuite, du chlorure de p-dicumyle (48,8 g, 0,21 mol) dissous dans du chlorure de butyle (séché sur tamis moléculaire, 0,31 L), de la triéthylamine (64,1 g, 0,63 mol), et du tétraisopropoxyde de titane (600 g, 2,1 mol) sont additionnés via des récipients additionnelles au moyen d'une pression d'azote. Puis, le tétrachlorure de titane (2,8 kg, 14,8 mol) est additionné afin de démarrer la polymérisation.

Peu de temps après, du paraméthylstyrène (0,10 kg, 8,4 mol) dissous dans du n-hexane (séché sur tamis moléculaire, 0,24 L) et du chlorure de butyle (séché sur tamis moléculaire, 0,57 L) est ajouté en continu pendant 30 mn. Les conversions de l'isobutylène et du paraméthylstyrène sont suivies par chromatographie en phase gazeuse (GC). Les conversions atteignent alors plus de 98,5 %.

Du styrène (3,8 kg, 36,8 mol) est ensuite ajouté dans le récipient de polymérisation. La conversion du styrène est suivie par chromatographie en phase gazeuse (GC). Lorsqu'une conversion du styrène de 80 % est atteinte, la solution de polymérisation et un mélange de solvants constitué de n-hexane et de chlorure de butyle (37,1 kg, 3/7 v/v) sont versés dans un récipient de désactivation contenant une solution de NaOH à 48 % en poids (12,3 kg) et de l'eau déionisée (112,7 kg) à 55°C afin de stopper la réaction et, ce mélange est alors agité pendant 60 mn. Ensuite, la solution de polymérisation est lavée avec de l'eau déionisée (3x 125 kg). Le solvant et les analogues sont évaporés à partir du brut de réaction lavé sous pression réduite à 80°C pendant 24 heures pour obtenir un copolymère à blocs non-bromé.

Le copolymère à bloc non-bromé (2,2 kg) est dissous dans du chlorure de butyle (9,5 L) et du n-hexane (4,1 L) dans un ballon de 20 litres. De l'azote est introduit dans la solution de polymère agitée au moyen d'une tige en acier inoxydable pendant 1 heure. Ensuite, du brome (67,8 ml, 1,37 mol) est ajouté et l'ensemble est irradié par de la lumière visible (LED 4 x 7,3 W). La conversion de l'étape de bromination est suivie par une méthode RMN. Lorsque la conversion de l'étape de bromination atteint 90 %, du chlorure de butyle (1,07 kg) et une solution aqueuse à 10 % en poids de Na₂SO₃ (1,78 kg) sont ajoutés et le mélange est agité jusqu'à ce que la solution de polymère se décolore. La solution de polymère bromé est alors lavée avec de l'eau déionisée (2 x 1,5 kg) et séchée au moyen du MgSO₄. La solution de polymère est filtrée et le solvant et les analogues sont évaporés à partir du brut de réaction sous pression réduite à 80°C pendant 24 heures pour obtenir le copolymère à blocs bromé C3 selon l'invention.

Les masses moléculaires du bloc élastomère (copolymère statistique isobutylène/bromométhylstyrène), du copolymère à bloc non-bromé et du copolymère à blocs bromé final sont mesurées par chromatographie sur gel perméable (GPC).

### Copolymère à blocs C4

Le copolymère à blocs C4 est synthétisé comme suit :
Un ballon séparable (récipient de polymérisation) de 5 litres est mis sous azote, puis du n-hexane (séché sur tamis moléculaire, 515 ml) et du chlorure de butyle (séché sur tamis moléculaire, 1202 ml) sont ajoutés au moyen d'une seringue. Le récipient de polymérisation est ensuite refroidi par immersion dans un bain sec glace/méthanol à -70°C. Un tube d'alimentation en Téflon est connecté à un flacon de collecte en verre résistant à la pression équipé avec un robinet à trois voies et contenant de l'isobutylène (420 ml, 4,45 mol). L'isobutylène est ajouté au récipient de polymérisation au moyen d'une pression d'azote. Ensuite, du chlorure de p-dicumyle (0,70 g, 3,0 mmol), de la triéthylamine (0,92 g, 9,1 mmol), et du tétraisopropoxyde de titane (8,97 ml, 30 mmol) sont additionnés. Puis, du tétrachlorure de titane (23,3 ml, 212 mmol) est additionné afin de démarrer la polymérisation.

Peu de temps après, le paraméthylstyrène (8,95 g, 75,7 mmol) est ajouté en continu pendant 30 mn. Les conversions de l'isobutylène et du paraméthylstyrène sont suivies par chromatographie en phase gazeuse (GC). Les conversions atteignent alors plus de 98,5 %.

Du styrène (60,7 ml, 528 mmol) est ensuite ajouté et la solution de polymérisation est agitée jusqu'à atteindre une conversion du styrène de 80 % (suivi de la conversion par chromatographie gazeuse (GC)). La solution de polymérisation et un mélange de solvants constitué de n-hexane et de chlorure de butyle (551 g, 3/7 v/v) sont versés dans un récipient de désactivation contenant une solution de NaOH à 48 % en poids (70,7 g) et de l'eau déionisée (1233 g) à 55°C afin de stopper la réaction et, ce mélange est alors agité pendant 60 mn. Ensuite, la solution de polymérisation est lavée avec de l'eau déionisée (3x 2000 g). Le solvant et les analogues sont évaporés à partir du brut de réaction lavé sous pression réduite à 80°C pendant 24 heures pour obtenir un copolymère à blocs non-bromé.

Le copolymère à bloc non-bromé (300 g) est dissous dans du chlorure de butyle (1,27 L) dans un ballon de 3 litres. De l'azote est introduit dans la solution de polymère agitée au moyen d'une tige en acier inoxydable pendant 1 heure. Ensuite, du brome (9,18 ml, 178 mmol) est ajouté et l'ensemble est irradié par de la lumière visible (LED 4 x 7,3 W). La conversion de l'étape de bromination est suivie par une méthode RMN. Lorsque la conversion de l'étape de bromination atteint 90 %, du chlorure de butyle (1,4 kg) et une solution aqueuse à 7 % en poids de Na₂SO₃ (300 g) sont ajoutés et le mélange est agité jusqu'à ce que la solution de polymère se décolore. La solution de polymère bromé est alors lavée avec de l'eau déionisée (2 x 300 g) et séchée au moyen du MgSO₄. La solution de polymère est filtrée et le solvant et les analogues sont évaporés à partir du brut de réaction sous pression réduite à 80°C pendant 24 heures pour obtenir le copolymère à blocs bromé C4 selon l'invention.

Les masses moléculaires du bloc élastomère (copolymère statistique isobutylène/bromométhylstyrène), du copolymère à bloc non-bromé et du copolymère à blocs bromé final sont mesurées par chromatographie sur gel perméable (GPC).

### Copolymère à blocs C5

Le copolymère à blocs C5 est synthétisé comme suit :
Un récipient (récipient de polymérisation) de 200 litres est mis sous azote, puis du n-hexane (séché sur tamis moléculaire, 25,3 kg) et du chlorure de butyle (séché sur tamis moléculaire, 79,4 kg) sont ajoutés au moyen d'une conduite de solvants. Le récipient de polymérisation est ensuite refroidi par une enveloppe calorifugée de trifluorométhane (HFC-23) à -70°C. De l'isobutylène (15,0 kg, 268 mol) est ajouté au récipient de polymérisation à partir d'un réservoir d'isobutylène. Ensuite, du chlorure de p-dicumyle (21,1 g, 0,09 mol) dissous dans du chlorure de butyle (séché sur tamis moléculaire, 0,12 kg), de la triéthylamine (55,3 g, 0,55 mol), et du tétraisopropoxyde de titane (666 g, 2,34 mol) sont additionnés via des récipients additionnelles au moyen d'une pression d'azote. Puis, du tétrachlorure de titane (3,1 kg, 16,4 mol) est additionné afin de démarrer la polymérisation.

Peu de temps après, du paraméthylstyrène (0,22 kg, 1,8 mol) dissous dans du n-hexane (séché sur tamis moléculaire, 0,30 L) et du chlorure de butyle (séché sur tamis moléculaire, 0,93 L) est ajouté en continu pendant 30 mn. Les conversions de l'isobutylène et du paraméthylstyrène sont suivies par chromatographie en phase gazeuse (GC). Les conversions atteignent alors plus de 98,5 %

Du styrène (3,3 kg, 31,7 mol) est ensuite ajouté dans le récipient de polymérisation. La conversion du styrène est suivie par chromatographie en phase gazeuse (GC). Lorsqu'une conversion du styrène de 80 % est atteinte, la solution de polymérisation et un mélange de solvants constitué de n-hexane et de chlorure de butyle (96,3 kg, 3/7 v/v) sont versés dans un récipient de désactivation contenant une solution de NaOH à 48 % en poids (8,7 kg) et de l'eau déionisée (170,6 kg) à 55°C afin de stopper la réaction et, ce mélange est alors agité pendant 60 mn. Ensuite, la solution de polymérisation est lavée avec de l'eau déionisée (3x 170 kg). Le solvant et les analogues sont évaporés à partir du brut de réaction lavé sous pression réduite à 80°C pendant 24 heures pour obtenir un copolymère à blocs non-bromé.

Le copolymère à bloc non-bromé (0,8 kg) est dissous dans du chlorure de butyle (4,7 L) et du n-hexane (0,5 L) dans un ballon de 50 litres. De l'azote est introduit dans la solution de polymère agitée au moyen d'une tige en acier inoxydable pendant 1 heure. Ensuite, du brome (8,4 ml, 0,16 mol) est ajouté et l'ensemble est irradié par de la lumière visible (LED 4 x 7,3 W). La conversion de l'étape de bromination est suivie par une méthode RMN. Lorsque la conversion de l'étape de bromination atteint 90 %, du chlorure de butyle (0,82 kg) et une solution aqueuse à 10 % en poids de Na₂SO₃ (0,80 kg) sont ajoutés et le mélange est agité jusqu'à ce que la solution de polymère se décolore. La solution de polymère bromé est alors lavée avec de l'eau déionisée (2 x 0,80 kg) et séchée au moyen du MgSO₄. La solution de polymère est filtrée et le solvant et les analogues sont évaporés à partir du brut de réaction sous pression réduite à 80°C pendant 24 heures pour obtenir le copolymère à blocs bromé C5 selon l'invention.

Les masses moléculaires du bloc élastomère (copolymère statistique isobutylène/bromométhylstyrène), du copolymère à bloc non-bromé et du copolymère à blocs bromé final sont mesurées par chromatographie sur gel perméable (GPC).

Les caractéristiques des copolymères à blocs C1 à C5 sont rassemblées dans le tableau 1 ci-dessous.

**Tableau 1**

| | **C1** | **C2** | **C3** | **C4** | **C5** |
|---|---|---|---|---|---|
| **Mp (en g)** | 106594 | 116251 | 117274 | 120421 | 210405 |
| **Mw (en g)** | 120903 | 124599 | 119028 | 138078 | 187657 |
| **Mw (idéale en g)** | 100K | 100K | 100K | 100K | 200K |
| **Mn (en g)** | 106104 | 98709 | 78337 | 111769 | 116388 |
| **Ip** | 1,14 | 1,26 | 1,52 | 1,24 | 1,61 |
| **Nb d'unités styrène⁽¹⁾** | 155 | 174 | 174 | 174 | 348 |
| **Nb d'unités pBMS⁽²⁾** | 0 | 40 | 40 | 25 | 20 |
| **M100 (MPa)⁽³⁾** | 0,64 | 0,56 | 0,77 | 0,82 | 0,66 |
| **Tb (MPa)⁽⁴⁾** | 15,21 | 1,61 | 4,29 | 5,69 | 6,12 |
| **Eb (en %)⁽⁵⁾** | 1167 | 1049 | 1130 | 1018 | 999 |
| **Dureté JIS A (0 sec)** | 26 | 22 | 36 | 37 | 30 |

| | | | | | |
|---|---|---|---|---|---|
| (1) Nombre moyen d'unités styrène dans une chaîne polymère par rapport à la masse molaire moyenne en poids idéale (2) Nombre moyen d'unités para-bromométhylstyrène dans une chaîne polymère par rapport à la masse molaire moyenne en poids idéale (3) Module sécant nominal à 100 % d'allongement (4) Contrainte à la rupture (5) Allongement à la rupture | | | | | |

### 2) Préparation de couches étanches à base d'une composition élastomérique pure (100 % en poids de copolymère à blocs)

Les copolymères à blocs obtenues (C1 à C5) ont été formulés dans des couches étanches aux gaz de gonflage constituées de 100 % de copolymère à blocs (respectivement couches A1 à A5).

La couche étanche comparative (A1) et les couches étanches utilisables selon l'invention (A2 à A5) sont préparées de façon classique, par exemple, par incorporation du copolymère à blocs dans une extrudeuse bi-vis, de façon à réaliser la fusion de la matrice, puis utilisation d'une filière plate permettant de réaliser la couche thermoplastique. Plus généralement, la mise en forme du thermoplastique peut être faite par toute méthode connue de l'homme du métier : extrusion, calandrage, extrusion soufflage, injection, film coulé (« cast film » en anglais).

Les propriétés d'adhésion de ces couches étanches ont ensuite été évaluées à température ambiante et à 60°C.

Les propriétés d'étanchéité de ces couches étanches ont été évaluées à 60°C.

Le tableau 2 ci-dessous rassemble les valeurs d'adhésion à température ambiante en base 100 des couches étanches A2 à A5 utilisables selon l'invention par rapport à la couche étanche comparative A1 (qui ne comprend pas d'unité para-bromométhylstyrène).

**Tableau 2**

| **Couche étanche** | **Adhésion à température ambiante (en base 100)** |
|---|---|
| A1 | 100 |
| A2 | 1167 |
| A3 | 1171 |
| A4 | 2076 |
| A5 | 2243 |

Le tableau 3 ci-dessous rassemble les valeurs d'adhésion à 60°C en base 100 des couches étanches A2 à A5 utilisables selon l'invention par rapport à la couche étanche comparative A1 (qui ne comprend pas d'unité para-bromométhylstyrène).

**Tableau 3**

| **Couche étanche** | **Adhésion à 60°C (en base 100)** |
|---|---|
| A1 | 100 |
| A2 | 1517 |
| A3 | 1267 |
| A4 | 1600 |
| A5 | 1017 |

Le tableau 4 ci-dessous rassemble les valeurs d'étanchéité à 60°C en base 100 des couches étanches A2 à A5 utilisables selon l'invention par rapport à la couche étanche comparative A1 (qui ne comprend pas d'unité para-bromométhylstyrène).

**Tableau 4**

| **Couche étanche** | **Etanchéité à 60°C (en base 100)** |
|---|---|
| A1 | 100 |
| A2 | 131 |
| A3 | 179 |
| A4 | 157 |
| A5 | 166 |

Ces données traduisent une forte augmentation du niveau d'adhésion des couches étanches utilisables selon l'invention par rapport à une couche étanche comparative ne comprenant pas d'unités para-bromométhylstyrène dans la structure du copolymère à blocs.

### 3) Préparation de couches étanches à base d'une composition élastomérique comprenant du copolymère à blocs, une charge renforçante et une huile plastifiante et tests

Les copolymères à blocs C1, C2, C3 et C4 précédemment décrits sont utilisés pour préparer des couches étanches aux gaz (respectivement couches F1 à F4).

Ces couches sont préparées à partir des ingrédients et des teneurs du tableau 5 ci-dessous.

Les couches étanches sont préparées de façon classique, par exemple, par incorporation des différents composants dans une extrudeuse bi-vis, de façon à réaliser la fusion de la matrice et une incorporation de tous les ingrédients, puis utilisation d'une filière plate permettant de réaliser la couche thermoplastique. Plus généralement, la mise en forme du thermoplastique peut être faite par toute méthode connue de l'homme du métier : extrusion, calandrage, extrusion soufflage, injection, cast film.

**Tableau 5**

| | **F1** | **F2** | **F3** | **F4** |
|---|---|---|---|---|
| **C1** | 100 pce | - | - | |
| **C2** | - | 100 pce | - | |
| **C3** | - | - | 100 pce | |
| **C4** | | | | 100 pce |
| **Huile d'extension⁽¹⁾** | 25 pce | 25 pce | 25 pce | 25 pce |
| **Charge⁽²⁾** | 2,4 pce | 2,4 pce | 2,4 pce | 2,4 pce |

| | | | | |
|---|---|---|---|---|
| (1) Huile PIB (2) Charge minérale lamellaire type kaolin | | | | |

Les propriétés d'adhésion de ces couches étanches ont ensuite été évaluées à température ambiante et à 60°C.

Les propriétés d'étanchéité de ces couches étanches ont été évaluées à 60°C.

Le tableau 6 ci-dessous rassemble les valeurs d'adhésion à température ambiante en base 100 des couches étanches F2 à F4 utilisables selon l'invention par rapport à la couche étanche comparative F1 (qui ne comprend pas d'unité para-bromométhylstyrène).

**Tableau 6**

| **Couche étanche** | **Adhésion à température ambiante (en base 100)** |
|---|---|
| F1 | 100 |
| F2 | 2367 |
| F3 | 1467 |
| F4 | 1500 |

Le tableau 7 ci-dessous rassemble les valeurs d'adhésion à 60°C en base 100 des couches étanches F2 à F4 utilisables selon l'invention par rapport à la couche étanche comparative F1 (qui ne comprend pas d'unité para-bromométhylstyrène).

**Tableau 7**

| **Couche étanche** | **Adhésion à 60°C (en base 100)** |
|---|---|
| F1 | 100 |
| F2 | 3500 |
| F3 | 2100 |
| F4 | 2400 |

Le tableau 8 ci-dessous rassemble les valeurs d'étanchéité à 60°C en base 100 des couches étanches F2 à F4 utilisables selon l'invention par rapport à la couche étanche comparative F1 (qui ne comprend pas d'unité para-bromométhylstyrène).

**Tableau 8**

| **Couche étanche** | **Etanchéité à 60°C (en base 100)** |
|---|---|
| F1 | 100 |
| F2 | 91 |
| F3 | 184 |
| F4 | 152 |

Ces données traduisent une forte augmentation du niveau d'adhésion des couches étanches utilisables selon l'invention par rapport à une couche étanche comparative ne comprenant pas d'unités para-bromométhylstyrène dans la structure du copolymère à blocs.

De plus, les couches étanches utilisables selon l'invention ont une meilleure étanchéité (pour les couches F3 et F4) que la couche étanche comparative ou une étanchéité équivalente (pour la couche F2).

## Revendications

1. Pneumatique comprenant un copolymère à blocs comprenant au moins un bloc thermoplastique comportant des unités issues d'un ou plusieurs monomères styréniques et au moins un bloc élastomère sous la forme d'un copolymère statistique comprenant des unités issues de l'isobutylène et des unités issues d'un ou plusieurs monomères halogénoalkylstyrène.

2. Pneumatique selon la revendication 1, **caractérisé en ce que** le ou les monomères styréniques sont choisis parmi le styrène, l'o-, mou p-méthylstyrène, l'alpha-méthylstyrène, le beta-méthylstyrène, le 2,6-diméthylstyrène, le 2,4-diméthylstyrène, l'alpha-méthyl-o-méthylstyrène, l'alpha-méthyl-m-méthylstyrène, l'alpha-méthyl-p-méthylstyrène, le beta-méthyl-o-méthylstyrène, le beta-méthyl-m-méthylstyrène, le beta-méthyl-p-méthylstyrène, le 2,4,6-triméthylstyrène, l'alpha-méthyl-2,6-diméthylstyrène, l'alpha-méthyl-2,4-diméthylstyrène, le beta-méthyl-2,6-diméthylstyrène, le beta-méthyl-2,4-diméthylstyrène, l'o-, m- ou p-chlorostyrène, le 2,6-dichlorostyrène, le 2,4-dichlorostyrène, l'alpha-chloro-o-chlorostyrène, l'alpha-chloro-m-chloro styrène, l'alpha-chloro-p-chlorostyrène, le beta-chloro-o-chlorostyrène, le beta-chloro-m-chlorostyrène, le beta-chloro-p-chlorostyrène, le 2,4,6-trichlorostyrène, l'alpha-chloro-2,6-dichlorostyrène, l'alpha-chloro-2,4-dichlorostyrène, le beta-chloro-2,6-dichlorostyrène, le beta-chloro-2,4-dichlorostyrène, l'o-, m- ou p-butylstyrène, l'o-, m- ou p-méthoxystyrène, l'o-, m- ou p-chlorométhylstyrène, l'o-, m- ou p-bromométhylstyrène, les dérivés styrènes substitués par un groupement silyle, et les mélanges de ces monomères, de préférence le ou les monomères styréniques sont choisis parmi le styrène, l'alpha-méthylstyrène, et les mélanges de ces monomères, et plus préférentiellement le monomère styrénique est le styrène.

3. Pneumatique selon la revendication 1 ou 2, **caractérisé en ce que** le ou les monomères halogénoalkylstyrène sont choisis parmi les monomères chloroalkylstyrène, bromoalkylstyrène, iodoalkylstyrène, et les mélanges de ces monomères, de préférence le ou les monomères halogénoalkylstyrène sont choisis parmi les monomères bromoalkylstyrène et les monomères chloroalkylstyrène, plus préférentiellement le monomère halogénoalkylstyrène est le bromométhylstyrène, et plus préférentiellement encore le monomère halogénoalkylstyrène est le para-bromométhylstyrène.

4. Pneumatique selon l'une quelconque des revendications précédentes, **caractérisé en ce que** la teneur des unités issues du ou des monomères halogénoalkylstyrène dans le ou les blocs élastomère varie de 0,5 à 5% en moles par rapport au nombre de moles du copolymère à blocs.

5. Pneumatique selon l'une quelconque des revendications précédentes, **caractérisé en ce que** le ou les blocs thermoplastiques du copolymère à blocs représentent de 5 à 50 % en poids, de préférence représentent de 10 à 40 % en poids, plus préférentiellement représentent de 15 à 35 % en poids, par rapport au poids total du copolymère à blocs.

6. Pneumatique selon l'une quelconque des revendications précédentes, **caractérisé en ce que** le copolymère à blocs a une température de transition vitreuse inférieure à -20°C, de préférence inférieure à -40°C.

7. Pneumatique selon l'une quelconque des revendications précédentes, **caractérisé en ce que** le copolymère à blocs a une masse moléculaire moyenne en nombre allant de 30 000 à 500 000 g/mol, de préférence allant de 40 000 à 400 000 g/mol, plus préférentiellement de 50 000 à 300 000 g/mol.

8. Pneumatique selon l'une quelconque des revendications précédentes, **caractérisé en ce que** le copolymère à blocs présente un indice de polydispersité inférieur à 3, de préférence inférieur à 2.

9. Pneumatique selon l'une quelconque des revendications précédentes, **caractérisé en ce que** le copolymère à blocs est choisi parmi les copolymères diblocs bloc thermoplastique/bloc élastomère, les copolymères triblocs bloc thermoplastique/bloc élastomère/bloc thermoplastique et les mélanges de ces copolymères, et de préférence le copolymère à blocs est un copolymère triblocs bloc thermoplastique/bloc élastomère/bloc thermoplastique.

10. Utilisation d'un copolymère à blocs tel que défini dans l'une quelconque des revendications 1 à 9 dans une couche étanche de pneumatique.

11. Pneumatique muni d'une couche étanche à base d'une composition élastomérique comprenant une matrice élastomérique qui comprend au moins 50 pce d'un copolymère à blocs tel que défini dans l'une quelconque des revendications 1 à 9.

12. Pneumatique selon la revendication 11, **caractérisé en ce que** la teneur en copolymère à blocs de la composition élastomérique varie de 70 à 100 pce, de préférence varie de 90 à 100 pce.

13. Pneumatique selon la revendication 11 ou 12, **caractérisé en ce que** la composition élastomérique comprend une ou plusieurs charges renforçantes.

14. Pneumatique selon l'une quelconque des revendications 11 à 13, **caractérisé en ce que** la composition élastomérique comprend un agent plastifiant.

## Patentansprüche

1. Reifen, umfassend ein Blockcopolymer mit mindestens einem thermoplastischen Block, der Einheiten, die sich von einem oder mehreren Styrolmonomeren ableiten, umfasst, und mindestens einem elastomeren Block in Form eines statistischen Copolymers, das Einheiten, die sich von Isobutylen ableiten, und Einheiten, die sich von einem oder mehreren Halogenalkylstyrol-Monomeren ableiten, umfasst.

2. Reifen nach Anspruch 1, **dadurch gekennzeichnet, dass** das Styrolmonomer bzw. die Styrolmonomere aus Styrol, o-, m- oder p-Methylstyrol, alpha-Methylstyrol, beta-Methylstyrol, 2,6-Dimethylstyrol, 2,4-Dimethylstyrol, alpha-Methyl-o-methylstyrol, alpha-Methyl-m-methylstyrol, alpha-Methyl-p-methylstyrol, beta-Methyl-o-methylstyrol, beta-Methyl-m-methylstyrol, beta-Methyl-p-methylstyrol, 2,4,6-Trimethylstyrol, alpha-Methyl-2,6-dimethylstyrol, alpha-Methyl-2,4-dimethylstyrol, beta-Methyl-2,6-dimethylstyrol, beta-Methyl-2,4-dimethylstyrol, o-, m- oder p-Chlorstyrol, 2,6-Dichlorstyrol, 2,4-Dichlorstyrol, alpha-Chlor-o-chlorstyrol, alpha-Chlor-m-chlorstyrol, alpha-Chlor-p-chlorstyrol, beta-Chlor-o-chlorstyrol, beta-Chlor-m-chlorstyrol, beta-Chlor-p-chlorstyrol, 2,4,6-Trichlorstyrol, alpha-Chlor-2,6-dichlorstyrol, alpha-Chlor-2,4-dichlorstyrol, beta-Chlor-2,6-dichlorstyrol, beta-Chlor-2,4-dichlorstyrol, o-, m- oder p-Butylstyrol, o-, m- oder p-Methoxystyrol, o-, m- oder p-Chlormethylstyrol, o-, m- oder p-Brommethylstyrol, Styrolderivaten, die durch eine Silylgruppe substituiert sind, und Mischungen dieser Monomere ausgewählt ist bzw. sind, vorzugsweise das Styrolmonomer bzw. die Styrolmonomere aus Styrol, alpha-Methylstyrol und Mischungen dieser Monomere ausgewählt ist bzw. sind und weiter bevorzugt das Styrolmonomer Styrol ist.

3. Reifen nach Anspruch 1 oder 2, **dadurch gekennzeichnet, dass** das Halogenalkylstyrol-Monomer bzw. die Halogenalkylstyrol-Monomere aus Chloralkylstyrol-, Bromalkylstyrol- und Iodalkylstyrol-Monomeren und Mischungen dieser Monomere ausgewählt ist bzw. sind, vorzugsweise das Halogenalkylstyrol-Monomer bzw. die Halogenalkylstyrol-Monomere aus Bromalkylstyrol-Monomeren und Chloralkylstyrol-Monomeren ausgewählt ist bzw. sind, weiter bevorzugt das Halogenalkylstyrol-Monomer Brommethylstyrol ist und noch weiter bevorzugt das Halogenalkylstyrol-Monomer para-Brommethylstyrol ist.

4. Reifen nach einem der vorhergehenden Ansprüche, **dadurch gekennzeichnet, dass** der Gehalt von Einheiten, die sich von dem Halogenalkylstyrol-Monomer bzw. den Halogenalkylstyrol-Monomeren ableiten, in dem elastomeren Block bzw. den elastomeren Blöcken im Bereich von 0,5 bis 5 Mol-%, bezogen auf die Zahl der Mole des Blockcopolymers, liegt.

5. Reifen nach einem der vorhergehenden Ansprüche, **dadurch gekennzeichnet, dass** der thermoplastische Block bzw. die thermoplastischen Blöcke des Blockcopolymers 5 bis 50 Gew.-%, vorzugsweise 10 bis 40 Gew.-% und weiter bevorzugt 15 bis 35 Gew.-%, bezogen auf das Gesamtgewicht des Blockcopolymers, ausmachen.

6. Reifen nach einem der vorhergehenden Ansprüche, **dadurch gekennzeichnet, dass** das Blockcopolymer eine Glasübergangstemperatur von weniger als -20 °C und vorzugsweise weniger als -40 °C aufweist.

7. Reifen nach einem der vorhergehenden Ansprüche, **dadurch gekennzeichnet, dass** das Blockcopolymer eine zahlenmittlere Molmasse im Bereich von 30.000 bis 500.000 g/mol, vorzugsweise im Bereich von 40.000 bis 400.000 g/mol und weiter bevorzugt von 50.000 bis 300.000 g/mol aufweist.

8. Reifen nach einem der vorhergehenden Ansprüche, **dadurch gekennzeichnet, dass** das Blockcopolymer einen Polydispersitätsindex von weniger als 3 und vorzugsweise weniger als 2 aufweist.

9. Reifen nach einem der vorhergehenden Ansprüche, **dadurch gekennzeichnet, dass** das Blockcopolymer aus thermoplastischer Block/elastomerer Block-Diblockcopolymeren, thermoplastischer Block/elastomerer Block/thermoplastischer Block-Triblockcopolymeren und Mischungen dieser Copolymere ausgewählt ist und vorzugsweise das Blockcopolymer ein thermoplastischer Block/elastomerer Block/thermoplastischer Block-Triblockcopolymer ist.

10. Verwendung eines Blockcopolymers gemäß einem der Ansprüche 1 bis 9 in einer dichten Schicht eines Reifens.

11. Reifen mit einer dichten Schicht auf Basis einer elastomeren Zusammensetzung, die eine elastomere Matrix umfasst, die mindestens 50 phe eines Blockcopolymers gemäß einem der Ansprüche 1 bis 9 umfasst.

12. Reifen nach Anspruch 11, **dadurch gekennzeichnet, dass** der Blockcopolymergehalt der elastomeren Zusammensetzung im Bereich von 70 bis 100 phe und vorzugsweise im Bereich von 90 bis 100 phe liegt.

13. Reifen nach Anspruch 11 oder 12, **dadurch gekennzeichnet, dass** die elastomere Zusammensetzung einen oder mehrere verstärkende Füllstoffe umfasst.

14. Reifen nach einem der Ansprüche 11 bis 13, **dadurch gekennzeichnet, dass** die elastomere Zusammensetzung einen Weichmacher umfasst.

## Claims

1. Tyre comprising a block copolymer comprising at least one thermoplastic block comprising units derived from one or more styrene monomers and at least one elastomeric block in the form of a statistical copolymer comprising at least units derived from isobutylene and units derived from one or more haloalkylstyrene monomers.

2. Tyre according to Claim 1, **characterized in that** the styrene monomers are chosen from styrene, o-, m- or p-methylstyrene, alpha-methyl styrene, beta-methylstyrene, 2,6-dimethyl styrene, 2,4-dimethylstyrene, alpha-methyl-o-methylstyrene, alpha-methyl-m-methylstyrene, alpha-methyl-p-methylstyrene, beta-methyl-o-methylstyrene, beta-methyl-m-methylstyrene, beta-methyl-p-methylstyrene, 2,4,6-trimethylstyrene, alpha-methyl-2,6-dimethylstyrene, alpha-methyl-2,4-dimethylstyrene, beta-methyl-2,6-dimethylstyrene, beta-methyl-2,4-dimethylstyrene, o-, m- or p-chlorostyrene, 2,6-dichlorostyrene, 2,4-dichlorostyrene, alpha-chloro-o-chlorostyrene, alpha-chloro-m-chlorostyrene, alpha-chloro-p-chlorostyrene, beta-chloro-o-chlorostyrene, beta-chloro-m-chlorostyrene, beta-chloro-p-chlorostyrene, 2,4,6-trichlorostyrene, alpha-chloro-2,6-dichlorostyrene, alpha-chloro-2,4-dichlorostyrene, beta-chloro-2,6-dichlorostyrene, beta-chloro-2,4-dichlorostyrene, o-, m- or p-butylstyrene, o-, m- or p-methoxystyrene, o-, m- or p-chloromethylstyrene, o-, m- or p-bromomethylstyrene, styrene derivatives substituted with a silyl group, and mixtures of these monomers; preferably, the styrene monomers are chosen from styrene, alpha-methyl styrene, and mixtures of these monomers, and more preferentially the styrene monomer is styrene.

3. Tyre according to Claim 1 or 2, **characterized in that** the haloalkylstyrene monomer(s) are chosen from chloroalkylstyrene, bromoalkylstyrene and iodoalkylstyrene monomers, and mixtures of these monomers; preferably, the haloalkylstyrene monomer(s) are chosen from bromoalkylstyrene and chloroalkylstyrene monomers, more preferentially, the haloalkylstyrene monomer is bromomethylstyrene, and even more preferentially the haloalkylstyrene monomer is para-bromomethylstyrene.

4. Tyre according to any one of the preceding claims, **characterized in that** the content of units derived from the haloalkylstyrene monomer(s) in the elastomeric block(s) ranges from 0.5 to 5 mol% relative to the number of moles of units of the block copolymer.

5. Tyre according to any one of the preceding claims, **characterized in that** the thermoplastic block(s) of the block copolymer represent from 5% to 50 % by weight, preferably represent from 10% to 40 % by weight and more preferentially represent from 15% to 35 % by weight, relative to the total weight of the block copolymer.

6. Tyre according to any one of the preceding claims, **characterized in that** the block copolymer has a glass transition temperature of less than -20°C, preferably less than -40°C.

7. Tyre according to any one of the preceding claims, **characterized in that** the block copolymer has a number-average molecular mass ranging from 30 000 to 500 000 g/mol, preferably ranging from 40 000 to 400 000 g/mol and more preferentially ranging from 50 000 to 300 000 g/mol.

8. Tyre according to any one of the preceding claims, **characterized in that** the block copolymer has a polydispersity index of less than 3, preferably less than 2.

9. Tyre according to any one of the preceding claims, **characterized in that** the block copolymer is chosen from thermoplastic block/elastomeric block diblock copolymers, thermoplastic block/elastomeric block/thermoplastic block triblock copolymers and mixtures of these copolymers, and preferably the block copolymer is a thermoplastic block/elastomeric block/thermoplastic block triblock copolymer.

10. Use of a block copolymer as defined in any one of Claims 1 to 9 in a leaktight layer of a tyre.

11. Tyre equipped with a leaktight layer based on an elastomeric composition comprising an elastomeric matrix which comprises at least 50 phr of a block copolymer as defined in any one of Claims 1 to 9.

12. Tyre according to Claim 11, **characterized in that** the block copolymer content of the elastomeric composition ranges from 70 to 100 phr, and preferably ranges from 90 to 100 phr.

13. Tyre according to Claim 11 or 12, **characterized in that** the elastomeric composition comprises one or more reinforcing fillers.

14. Tyre according to any one of Claims 11 to 13, **characterized in that** the elastomeric composition comprises a plasticizer.
